# EUROPEAN PATENT APPLICATION

(11) **EP 0 772 150 A1**
(43) Date of publication of application: **07.05.1997**
(21) Application number: 96306876.2
(22) Date of filing: 20.09.1996
(51) Int. Cl.: G06K 15/10

(54) **Interlaced colour inkjet printing**

(30) Priority: 31.10.1995 US 551265
(71) Applicant: Hewlett-Packard Company, Palo Alto, California 94304 (US)
(72) Inventor: Skene, John M., Lake Oswego, OR 97035 (US); Bauman, Joseph H., Brush Prairie, WA 98606 (US)
(74) Representative: Colgan, Stephen James

(57) **Abstract**

An improved print mode and system for alleviating wait-banding, haloing, and bloom is disclosed. Printing is done with separate black and color printheads. The color nozzle groups are arranged vertically with respect to each other on the color printhead, and each nozzle group is approximately 1/3 the height of the black nozzle swath height. In the disclosed print mode, the black and color shingle patterns are asymmetric in their area fill density. The black scans are printed with a 1/3 shingle pattern, or 33% area fill, and the black scans are made at the maximum carriage speed. After each black scan, no paper advance is made, and a color scan is in the opposite direction, with 100% area fill, or in other words, no shingle pattern. After each color scan, the paper is advanced approximately 1/3 of the total black swath height. Another black scan is then made, and the process repeats. An alternative embodiment uses a 1/6 area fill shingle pattern for black and 1/2 area fill shingle pattern for color. In this mode, the paper advances after each color scan is 1/6 of the black swath height.

## Description

### BACKGROUND OF THE INVENTION

### Related Case Information

This is a continuation-in-part of co-pending U.S. Serial No. 08/400,056, filed March 6,1995, and entitled "MILD-DENSITY PRINT MASKING IN A MIXED SWATH HEIGHT PRINTER."

### Field of the Invention

The present invention relates to printing methods for a scanning ink-jet printers and particularly to a printing method using different area fill densities for black and color.

### Statement of the Relevant Art

Ink jet printers commonly use a scanning printhead to deposit a matrix of dots on a print medium (e.g., paper) as the printhead is scanned back and forth across the print zone. Dots of the 3 subtractive primary colors: cyan, magenta, and yellow (CMY), and black can be combined to create the visual perception of a wide range of colors. The printed image is composed of a series of horizontal swaths, which taken together, create the overall image.

Print quality defects can result from various factors. Problems with the printhead, such as clogged nozzles, can cause a row of dots not to print at all. Nozzles with a trajectory error (nozzles firing at some oblique angle to the page) and errors in the mechanical assemblies used to advance the print medium can cause light and/or dark horizontal lines. Errors in the assembly used to scan the printhead back and forth across the page can also cause print defects.

Various methods and systems have been used to hide or otherwise ameliorate such problems. For example, U.S. Patent No. 4,748,453 (Lin et al.) discloses a 2-pass method for reducing or eliminating pooling of ink droplets when printing on overhead transparencies or other nonabsorbent material. In the first pass, the printhead lays down a checkerboard pattern of alternating dots, with adjacent diagonal dots being contiguous. On the second pass, a complementary checkerboard pattern of alternating dots are laid down in the interstitial positions between the dots of the first pass. It is intended that dots laid down on the first pass will have time to dry before the dots are deposited on the second pass.

U.S. Patent No. 4,967,203 (Doan et al.), assigned to the present assignee, also discloses a 2-pass print mode. In the first pass, a checkerboard pattern of 2 X 2 dot clusters is printed. Alter the first pass, the paper is advanced a portion of the printhead swath height. A second pass is then made with a different set of nozzles to print a second checkerboard pattern of 2 X 2 dot clusters, complementary in position and interleaved with the first pattern. Successive passes of the printhead are made, with partial swath height advances of the print medium between passes, to complete the intended image. The 2 complementary patterns are thus "interleaved" or "shingled" between print swaths similar to the way shingles on a roof are laid down. This shingling effect alleviates banding artifacts.

In color printing, a problem called "wait-banding" can result from time delays between when the primary colors are laid down. The hue of the secondary color resulting on the page can vary depending on the time delay between when the first and second color passes are made. This difference is due in large part to the ink drops of the first pass drying in different degrees before the drops of the second pass are deposited. For example, assume an area of blue is to be printed. In one swath a cyan pass is made, a time T1 goes by, and then the magenta pass is made over the cyan. A given hue of blue will result. On a contiguous swath, a cyan pass is made, but then a different time T2 goes by before the magenta pass is made. In the second contiguous swath, a slightly different hue of blue will result, and the observer will see two narrow horizontal bands of slightly different shades of blue.

A problem called "haloing" can occur when a black region is printed next to a color region. When certain black inks are laid next to certain color inks, an interaction occurs that creates the visual impression that the black area has a "halo" around it. This problem occurs because of different chemistries between the black and color inks.

Another problem resulting from interaction between black and color inks is referred to as "bloom." This problem occurs when individual black dots are laid down in a color area. When this happens, the black dots may swell in size, covering a larger area than was intended for each black dot. There is enough pigment in the black dot to effectively black out the newer larger area of the black dot, which results in the affected color area being darker than was intended by the imaging software. Bloom is particularly a problem when black dots are laid down in a yellow region, and can result in undesirable horizontal bands of alternating intensities.

Haloing and bloom are dependent on the time between when the black and color dots are laid down. If the black or color ink has had time to dry, haloing and bloom are substantially decreased. Therefore, one might solve these problems by increasing the time delay between color and black passes. However, any delays decrease the "throughput" of the printer. Throughput is a critical point of competition in the ink-jet printer marketplace.

There remains a need for a color printing method and system that minimizes wait-banding and haloing without also undue decreases in the throughput of the printer.

### SUMMARY OF THE INVENTION

The invention provides a method of printing on a print medium. This method includes the following steps: (a) providing a scanning ink-jet printhead with black nozzles having a black swath height (K); (b) providing color nozzles, the color nozzles being divided into a plurality of color nozzle groups, each the group having a color swath height (C) that is less than the black swath height; (c) providing a preselected color area fill density; (d) providing a black shingle mask having a black area fill density that is C/K of the color area fill density; (e) printing a black pass according to the black shingle mask; (f) printing a color pass in the opposite scanning direction from black pass at the color area fill density; (g) advancing the print medium a portion of the black swath height; and (h) repeating steps (e), (f), and (g) to print a desired image.

In another aspect of the invention, the method includes the following steps: (a) providing black nozzles having a black swath height; (b) providing at least 3 color nozzle groups that are positioned vertically with respect to each other and which each have a color swath height; (c) providing a preselected color area fill density; (d) providing a black shingle mask having an area fill density that is less than the color area fill density; (e) printing a black pass according to the black shingle mask; (f) printing a color pass at the preselected color area fill density; (g) advancing the print medium approximately the amount of the color swath height; and (h) repeating steps (e) through (g) until a desired image is completed.

In either aspect of the invention, the order of the black and color passes can be reversed. Printing methods according to the invention minimize wait-banding and haloing. These problems are solved without an undue decrease in throughput.

### BRIEF DESCRIPTION OF THE DRAWINGS

Fig. 1 is a perspective, partial cut-away, view of a printer of the invention.
Fig. 2 is a plan view of the nozzles of print cartridges 18 and 20 of Fig. 1.
Fig. 3 illustrates a prior art print mode.
Fig. 4 illustrates a print mode of the invention.
Fig. 5 illustrates an alternative embodiment of a print mode of the invention.

### DETAILED DESCRIPTION OF THE ILLUSTRATED EMBODIMENT

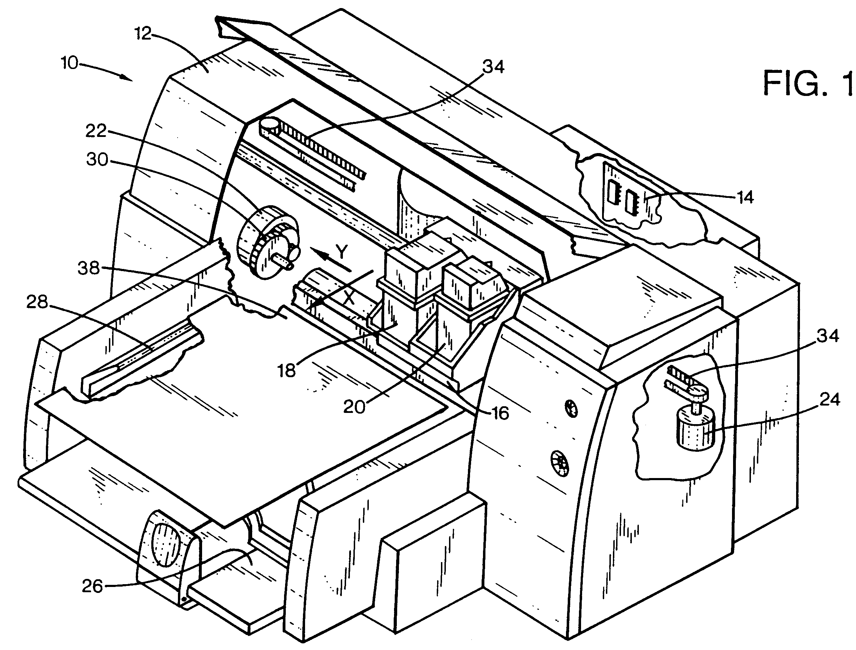

Fig. 1 illustrates an ink-jet printer, generally indicated at 10, of the invention. Printer 10 includes a housing 12 in which are mounted a controller 14, a print cartridge carriage 16 (which receives print cartridges 18 and 20), medium advance motor 22, and carriage drive motor 24. Also attached to housing 12 are a paper input tray 26, and paper output wings 28. Controller 14 is communicatively connected to a host printing device (not shown), such as a personal computer, from which it receives data signals representative of the image and/or text desired to be printed. Controller 14 is also communicatively connected with printheads 18 and 20, medium-advance motor 22, and carriage advance motor 24. Medium-advance motor 22 is linked via a gearing assembly 32 to polymeric rollers (not shown) that drive the print medium through the printer. Medium-advance motor 22 is also engaged via a clutch and gearing assembly (not shown) to wings 28 to selectively (based on input from controller 14) open or close wings 28. Carriage advance motor 24 is linked via a drive belt 34 to carriage 16. A stack of paper is placed in the input tray 26. Sheet of paper 38 is shown being printed on.

At the appropriate time, controller 14 actuates carriage advance motor 24 to drive carriage 26 in the carriage advance axis Y to scan printheads 18 and 20 over the current swath on sheet 38. As print cartridges 18 and 20 are scanned in the Y direction, the printheads are addressed by controller 14 to expel droplets of ink in the desired dot matrix pattern across sheet 38. After a scan is complete, controller 14 sends a signal to medium-advance motor 22 to advance sheet 38 incrementally in the medium-advance direction X shown so that the printheads can begin another pass. Multiple adjacent horizontal passes are printed in this manner to complete the printing of the desired image on the page. More than one pass can also be made over the same section without advancing the paper. As page 38 is printed, it rests on wings 28. After page 38 is completed, and when the previous page is dry and/or when a new page is ready to print, wings 28 open up and allow page 38 to drop vertically down onto the previous page. Since the previous page is typically relatively dry, and since page 38 drops vertically down onto this previous page, it is intended that no smearing of the ink will occur on the previous page.

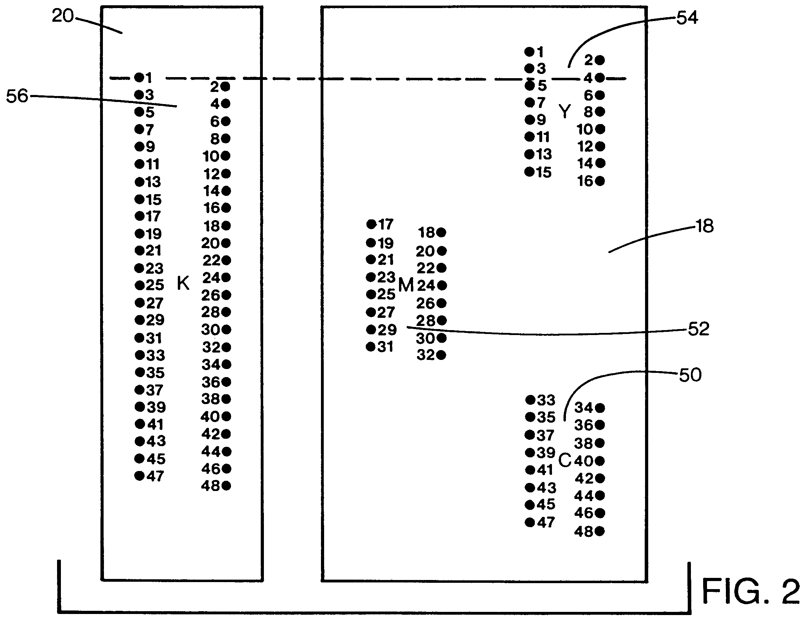

Fig. 2 is a plan view of printheads 18 and 20 as viewed (fictitiously) through the printheads onto the paper. The color printhead 18 has 3 groups 50, 52, and 54 of nozzles. Nozzle group 50 is for cyan (C) ink, nozzle group 52 is for magenta (M) ink, and nozzle group 54 is for yellow (Y) ink. Black (K) printhead 20 has one group 56 of nozzles. Each group 50, 52, 54 of color nozzles has 16 nozzles. Group 56 of black nozzles has 48 nozzles. The number of black nozzles is an integer multiple of the number of color nozzles used (16 X 3 = 48). The size and spacing of nozzle groups in printheads 18 and 20 may be conveniently be measured in the "vertical" and "horizontal" directions shown in Fig. 2. This vertical direction is not up and down in a gravitational reference frame, but serves as a useful convention in defining the position and size of the nozzle groups.

The spacing between nozzles in each of the nozzle groups is the same. In the printheads shown, the spacing between nozzles is 1/300 inch. Even though the spacing of the nozzles is the same for the black and color printheads, it is possible to print with differing resolutions. It may be more important to have a higher resolution for the black nozzles than for the color nozzles, since the human eye can detect print quality defects much more easily in black printing than in color printing. Also, fine resolution is usually more important in text, which is usually in black, than in images, which are often in color.

In the illustrated print modes, in the black passes, the dots are laid down at a horizontal dot spacing of 1/600 inch. In the color passes, the dots are laid down at horizontal dot spacing of 1/300 inch. Both black and color dots are spaced at 1/300 inch in the vertical direction. Thus, the black is printed at 600 X 300 DPI and the color is printed at 300 X 300 DPI.

The present invention does not require that the nozzle spacing be the same on the black and color printheads. For example, the black nozzles may be spaced at 1/600 inch and the color nozzles spaced 1/300 inch. In this case the black may be printed at 600 X 600 DPI and the color at 300 X 300 DPI.

Some measurement conventions used in this specification are now discussed. Since the black printhead has 48 nozzles, the actual distance between the top and bottom nozzles in the black printhead is 47 dot rows. Each of the color groups has 16 nozzles. Therefore, the actual distance between the top and bottom nozzle of each color group 50, 52, and 54 is 15 dot rows. However, when the paper is advanced, it is advanced one dot row more than the actual dot row height of the nozzle group to place the bottom nozzle one dot row above the position printed by the top nozzle during the previous pass. Therefore, even though the actual distance between the top and bottom nozzles of the color nozzle groups is 15 dot rows, the swath height of the color groups is said to be 16 nozzles, since this is the distance the paper must be advanced to place the printhead in position to begin another pass. Similarly, the swath height of the black printhead is said to be 48 nozzles, since this is the distance the paper must be advanced to place the printhead with respect to the paper to print another pass complete swath height pass.

As shown, the color nozzle groups are positioned vertically with respect to each other. Viewed in the vertical direction, there are 4 nozzles skipped between nozzle group 50 and nozzle group 52 and 4 nozzles skipped between nozzle group 52 and nozzle group 54. This number of nozzles skipped (4 nozzles) is 1/4 of the total nozzles in each of the color nozzle groups 50,52,54, since each of these nozzle groups has 16 nozzles.

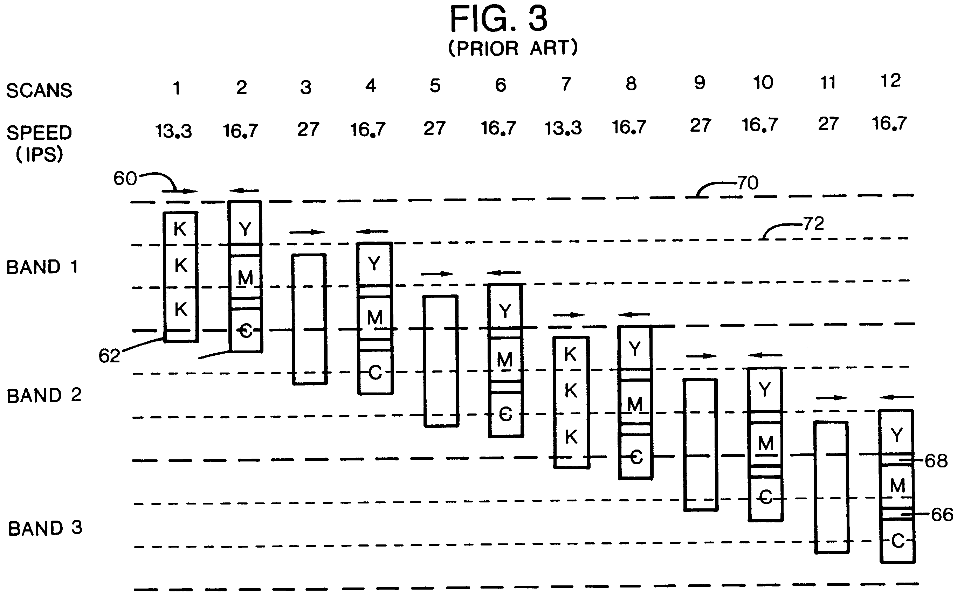

Fig. 3 illustrates a prior art print mode. The row of numbers at the top of the chart, labeled "scans" represent scans or passes of the carriage 16 and print cartridges 18, 20 across the page. The next row, labeled "speed" represents the speed of the carriage as it is scanned across the page. The arrows shown, such as arrow 60, represent the direction of the carriage as it scans across the page. The carriage scans either to the right or to the left, as shown by the arrows. The 3 horizontal divisions labeled "Band 1," "Band 2," and "Band 3", represent 3 bands of the desired image. Within these bands, the smaller rectangular boxes, such as box 62, represents passes made with the black printhead.

The larger rectangular boxes, such as box 64 represents passes made with the color printhead. Print passes that have a box labeled with "K K K" mean that during that particular pass black dots are laid down if the image calls for black dots. Likewise, passes that have boxes labeled "C Y M" indicate that color dots are laid down during that particular pass if the image calls for color dots. If the box is empty, such as in scans 3, 5, 9, and 11, no dots of the indicated printhead are laid down. In other words, during that scan, the printer just does a high-speed retrace of the carriage to get set for the next scan. The small empty spaces, such as 66 and 68 in the color printhead boxes represent the 4 nozzles skipped in the vertical direction between the color nozzle groups, as previously mentioned. The dotted lines, such as lines 70 and 72, indicate the distance of the paper advances with respect to the of the printheads. The darker dotted lines, such as line 70, indicates the division between bands.

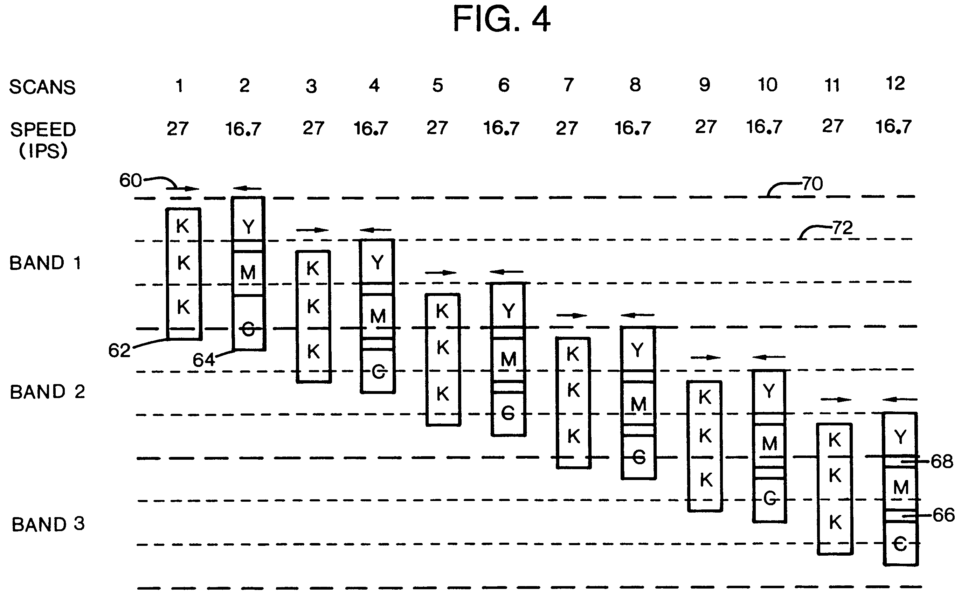

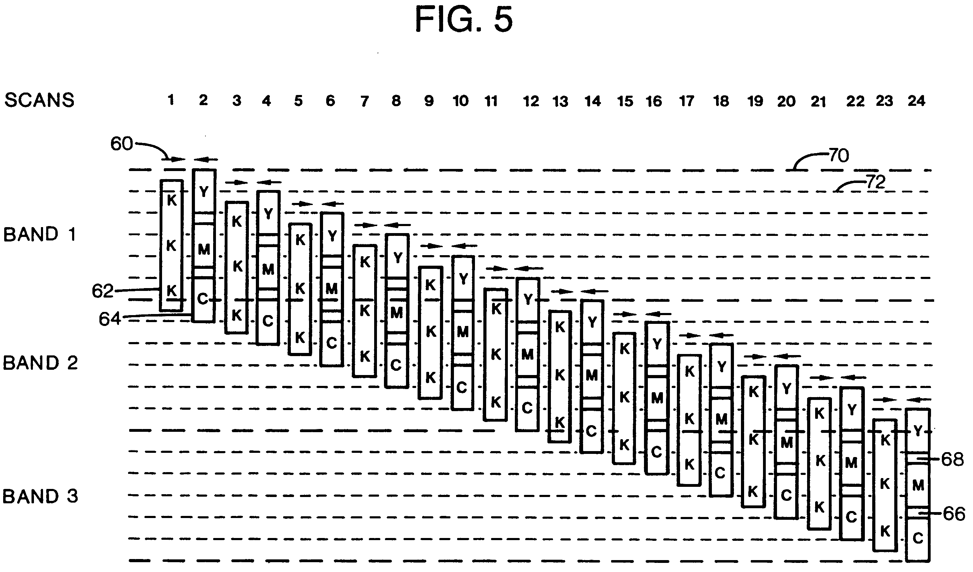

It is important to distinguish between scans of the carriage and bands of printing on the page. A scan of the carriage or printhead means that the printhead is driven across the page, in one direction or the other. Printing may or may not occur during such a scan. A band of printing on the other hand is a completed horizontal section of the desired image. It may take several scans of the printhead to complete a particular band. Three bands of printing are shown in Fig. 3 (also in Figs. 4 and 5). In the print passes shown, each band is completed with 48 total nozzle rows. Since the printhead nozzle spacing is 1/300 inch, each band is 48/300 inch, or 0.16 inch. Only band 2 is shown to be frilly completed. In Figs. 3, 4, and 5, Band 2 illustrates the "steady state" of the illustrated print mode. For a band to be complete, each horizontal section of the band scanned by each of the cyan, magenta, and yellow nozzle groups and by all of the black nozzles.

In the print mode of Fig. 3, once steady state is achieved, six scans of the printhead are required to complete a band. Of course, Bands 1 and 2 could be completed by making the appropriate number of additional passes prior to or subsequent to the passes shown. At the top and bottom of an image, 4 additional scans can be made to ensure that all areas of the image are addressed by all colors of nozzles. In these beginning and ending scans, only those nozzles are used that are necessary to completely address all image sections need be activated.

In the print mode shown in Fig. 3, no shingling is used. All of the dots in the image that apply to each vertical section of the image are completed in one pass. Of course, the image probably does not call for a complete black out of the area scanned by the printhead. In fact, the image may have no black dots at all in this region. But if any black dots are called for in the image, they will all be laid down for the swath height of the black printhead (i.e., its entire 48 nozzle swath height) during this one pass. Since any and all black dots called for in the image are to be laid down in that single pass, this pass is said to have 100% area fill density, even though none or few black dots may actually be called for in the image for that pass. This method of printing is also called a one-pass print mode.

Similarly, all of the color dots for each of the three primary colors, cyan, magenta, and yellow, are laid down in a single pass for each of the vertical page sections corresponding to the full swath height (16 nozzles) of the color nozzle groups. After each color scan (the even numbered scans), the paper is advanced 16 dot rows, which is 16/300 inch or 0.0533 inches. This paper advance is the swath height of the color nozzle groups (or one-third of the black swath height).

As stated, in the first scan, all black dots called for in the image are addressed. In other words, no masking of dot positions is used. If the black dots were shingled, some predetermined portion of the dots would be masked out, so that the dots actually laid down would be in some checkerboard or other shingled pattern. The firing frequency (the number of nozzles fired per second) of the black printhead is 8 KHz. In the black passes, the dots are laid down in the horizontal direction at a dot spacing of 1/600 inch. At this dot spacing, at 100% area fill density, the carriage can scan the black printhead at 13.3 ips. On this first scan, as shown by the arrow, the printhead scans to the right. After the first scan, the page is not advanced.

In the second scan, the printhead scans toward the left with the color printhead. The color dots are laid down in the horizontal direction at a dot spacing of 1/300 inch. The color pass is also made at 100% area fill density. In this mode, the frequency of the color printhead is 5 Khz, and the carriage scans at 16.7 ips, as shown.

After the second scan, the paper is advanced 16 dot rows. In Scan 3, no nozzles are addressed, as indicated by the blank box. When no nozzles are addressed, the carriage can scan at its maximum mechanical speed, which is 27 ips, as shown. Scan 3 may be referred to as a high-speed retrace of the carriage. Scan 4 is another color scan. After Scan 4, the paper is again advanced 16 dot rows. This process continues as shown.

An advantage of having high-speed retraces in Scans 3, 5, 9, etc. is that the color nozzles are always depositing dots in the same direction. This is advantageous because if the color dots were deposited in both directions in immediately successive scans, a slight color difference would be seen between the two horizontal ends of the bands. This is true because if the color nozzles begin immediately depositing dots in the reverse direction after a previous scan, the newly-deposited color dots will be laid down on the most recently deposited (and therefore most wet) dots; whereas the dots laid down at the end of the reverse scan will be laid down on the earliest deposited (and most dry) dots of the previous scan. As noted earlier, the secondary hue that results depends on the time delay between when the two primary colors are laid down. It is therefore preferable in color printing to always print color scans in the same direction. The high-speed retraces of scans 3, 5, 9, 11, etc. allow for this desirable same-direction color printing.

A disadvantage of the print mode shown in FIG. 3 is that there are uneven time delays between certain color scans because of the black nozzle scans in Scans 1, 7, and 13. The only time delay between Scans 4 and 5 results from the high-speed retrace of Scan 5, which is done at 27 ips. However, the time delay between Scans 6 and 8 results from the black nozzle scan of Scan 7, which is done at 13.3 ips. This is approximately half of the maximum carriage speed (27 ips) used during the high-speed retrace. Therefore, there will be a slightly different hue achieved by the dots printed between Scans 4 and 5 than the dots printed between Scans 6 and 8. This problem creates the visual appearance of horizontal bands of varying color, and is therefore referred to as wait-banding.

Various problems result from interaction between the ink in the black and color print areas. When a black region is printed next to a color region, interaction between the black and color ink can create the visual perception of a halo region around the black areas. In addition, when single black dots are printed within a color area, the individual black dots tend to expand or bloom. There is sufficient pigment in the black dot to effectively black out the newer larger area of the black dot, thus making the total color area affected darker than intended by the imaging algorithm. Bloom is particularly a problem when black dots are printed within a yellow area (e.g., to make the yellow darker). Undesirable haloing and bloom are both dependent upon the time delay between when the black and color dots are laid down. Also, different halo and bloom result when black is laid down after color compared to when color is laid down alter black.

In the print mode of FIG. 3, there are widely varying time delays between when certain color dots are laid next to black dots. These differences are further complicated by the order of printing between black and color. Therefore, the haloing and bloom are variable over the image. For example, the color dots of Scan 2 are laid down immediately after the black dots of Scan 1. The color dots of Scan 4 are laid down alter 2 intervening scans (Scans 2 and 3). The color dots of Scan 6 are laid down alter 4 intervening scans (Scans 2, 3, 4, and 5). The color dots of Scan 6 are laid down immediately before the black dots of Scan 7..

Another important factor to consider is the speed with which a page is printed, which is referred to as the throughput of the printer. Once steady state has been achieved, the print mode of FIG. 3 requires 6 scans of the carriage: one scan at 13.3 ips (black scan), 3 scans at 16.7 ips (color scans), and 2 scans at 27 ips (high-speed retraces). For a band 7 inches wide in the horizontal scanning direction on a page, these 6 scans would require 2.3 seconds. Since each band is 0.16 in. high, an image 10 in. tall would require 62.5 bands, which at 2.3 sec. per band would take 144 seconds to print.

FIG. 4 illustrates a print mode of the present invention. In this print mode, there are no high-speed retraces. During each of the black scans, 1/3 of the available dot positions are printed. In other words, 2/3 of the dot positions are masked to result in a one-third area fill density shingle pattern. The black dots are laid down in such a way that after 3 scans are completed, all dot positions have been addressed. The order of the black and color scans can be reversed.

A major advantage of using the 1/3 area fill shingle patterns in the black scans is that because of the smaller number of dots that are printed, the carriage can print at its full mechanical speed, which is 27 ips. Note also that in the print mode of Fig. 4, all of the color scans are made in the same direction, thus providing the advantages previously mentioned for always printing color in the same direction.

In addition, the print mode of FIG. 4 alleviates white-banding in the black regions. White-banding occurs when there is a trajectory error or a paper advance error between print bands. Such a trajectory error or paper advance error can cause one or more nozzle rows to be left blank between print bands. When shingling between bands is used, this white-banding is alleviated because the overlapping scans tend to hide any such white areas. Since the color nozzle groups are not shingled, white-banding can be a problem. White-banding is less of a problem if lighter colors are being used. The print mode of FIG. 4 may be slightly altered to provide a small amount of e.g., 1 or 2 nozzle row shingling to alleviate white-banding.

Once steady state has been achieved (Band 2) the print mode of FIG. 4 requires 6 scans of the carriage to complete a band. These 6 passes are composed of 3 scans at 27 ips (the black one-third area fill density scans) and 3 scans at 16.7 ips (the color scans). At these carriage speeds, and using a 7 in. wide band, each band would require 1.55 sec. to complete. A 10 in. high image would require 62.5 bands and would take 97.2 seconds, compared to 144 sec. required by the print mode of FIG. 3. Thus, the per page throughput for this exemplary image is significantly improved compared to the print mode of FIG. 3.

Another advantage in the illustrated print mode is that uneven time delays between the color scans of primary colors is reduced. Except for anomalies due to the 4 nozzle spacing between the nozzle groups, there is simply a single high-speed 1/3 shingled black scan between each primary color scan. This reduces the differences in time delay provided in the print mode of FIG. 3 between the high-speed retraces at 27 ips and the much slower 100% fill black scans at 13.3 ips.

The following Chart 1 illustrates anomalies due to the 4 nozzle spacings in the print mode of Fig. 3. This chart only shows the color passes (pass 2, 4, 6, 8, 10 and 12) and only deals with Band 2, the steady state band. Each horizontal subdivision below the headings represent a space on the page that 4 nozzles would cover. This 4 nozzle area may be called a sub-band. Since, there are 12 sub-bands, the entire 48 nozzle swath height of band 2 is shown (12 X 4 = 48). Thus, the 4 vertical "C's", for example in pass 4 represent the entire 16 nozzles swath height of the cyan nozzle group being addressed in this pass. As shown, there are 4 nozzles skipped vertically always between the cyan and magenta nozzles and between the magenta and yellow nozzles. This corresponds to the 4 nozzles skipped on the color printhead between nozzle groups. The column labeled "Pattern" indicates the order and time spacing of the primary colors being printed for each 4-nozzle sub-band. A "#" sign indicates that there was a pass of the color printhead that was made during which there was no primary color printed for that particular sub-band because of the 4-nozzle gap between color nozzle groups.

| **Chart 1** | | | | | | | |
|---|---|---|---|---|---|---|---|
| | **Pass** | | | | | | |
| **Sub- band** | **2** | **4** | **6** | **8** | **10** | **12** | **Pattern** |
| 1 | C | M | | Y | | | CM#Y |
| 2 | C | | M | Y | | | C#MY |
| 3 | | C | M | Y | | | CMY |
| 4 | | C | M | Y | | | CMY |
| 5 | | C | M | | Y | | CM#Y |
| 6 | | C | | M | Y | | C#MY |
| 7 | | | C | M | Y | | CMY |
| 8 | | | C | M | Y | | CMY |
| 9 | | | C | M | | Y | CM#Y |
| 10 | | | C | | M | Y | C#MY |
| 11 | | | | C | M | Y | CMY |
| 12 | | | | C | M | Y | CMY |

As can be seen, for all sub-bands, the order of the primary colors is always the same. In half of the sub-bands (sub-bands 3,4,7,8,11, and 12), the pattern is "CMY," meaning that this sub-band has no unprinted color passes. These sub-bands are viewed as the ideal. However, in the other half of the sub-bands (sub-bands 1,2,5,6,9, and 10), the pattern is either "C#MY" or "CM#Y," meaning that there is a color pass between either the cyan and magenta pass or the magenta and yellow pass during which there is no color printing for the sub-band. These sub-bands viewed as non-ideal because there is a potential for wait-banding hue differences between these sub-bands and the ideal sub-bands. It should be noted that the non-ideal sub-bands are only 2 sub-bands (8 nozzles) in swath height and are intermingled among contiguous 8-nozzle sections of ideal color printing. Even though not all sub-bands are ideal, the print mode of Fig. 4 provides significant reduction in visible wait-banding over the print mode of Fig. 3.

Another important advantage of the print mode of Fig. 4 is provided by the fact that color dots are not laid down next to black regions that have received full area fill in the immediately preceding scan, such as occurs in scans 2, 8, and 14, etc. of the print mode of FIG. 3. Nor is a full area fill density black scan performed immediately after a color scan such as occurs in scans 7 and 13 of the print mode of FIG. 3. In the print mode of FIG. 4, color dots are only laid down only after black scans having 1/3 area fill density. Similarly, black dots are laid down only in 1/3 area fill patterns after color dots are laid down. Haloing and bloom are thus greatly reduced because these effects are dependent upon the total amount of wet black and color dots laid down next to each other.

FIG. 5 illustrates an alternative embodiment of a print mode of the invention. In the print mode of FIG. 5, twice as many scans of the carriage are made per band as in the print mode of FIG. 4. Once steady state has been achieved (band 2), 12 scans are required per band. The black print scans are masked to provide a 1/6 area fill density, and the color scans are masked to provide a 1/2 (or 50%) area fill density. As stated earlier, when a print pass is shingled at a particular area fill density, it does not necessarily mean that dots at that total density will be laid down in that pass. It just means that the image will be masked so that all dots in the image for that particular color will be masked at the indicated area fill density. As with the print mode of FIG. 4, the order of the black and color scans can be reversed.

The print mode of FIG. 5 provides many of the advantages of FIG. 4 in reducing haloing and color banding. Additionally, the print mode of FIG. 5 alleviates white-banding in the color regions. Although a 50% overlap is shown for the color passes in the print mode of FIG. 5, a lessor amount of color overlap may be used.

Of course, a disadvantage of the print mode of FIG. 5 is that it decreases throughput. One might think that with twice as many print swaths per page, the throughput would be decreased by roughly one-half However, this is not true. At 50% area fill, the color scans can now be performed at the maximum mechanical carriage speed, 27 ips, rather than the 16.7 ips used when the color printhead is operated at 100% dot fill. Thus, all of the scans in the print mode of FIG. 5 can be performed at full carriage speed, or 27 ips. At this speed, the above mentioned 7 in. swath, once steady state has been achieved (Band 2), would take 3.11 sec. The previously mentioned 10 in high image of 62.5 bands would require 194 sec. as compared to 127 sec. for the print mode of FIG. 4. Thus, even though there are twice as many scans per band in the print mode of FIG. 5, the throughput is only decreased in this example by approximately 53%, as opposed to 100%.

The following Chart 2 illustrates anomalies in the print mode of Fig. 5 due to the 4 nozzle spacings between the nozzle groups. As with Chart 1, this chart only shows color passes (the even passes) and only deals with Band 2, the steady state band. Also, as with Chart 1, each horizontal subdivision below the headings represent a 4-nozzle sub-band.

| **Chart 2** | | | | | | | | | | | | | |
|---|---|---|---|---|---|---|---|---|---|---|---|---|---|
| | **Pass** | | | | | | | | | | | | |
| **Sub- band** | **2** | **4** | **6** | **8** | **10** | **12** | **14** | **16** | **18** | **20** | **22** | **24** | **Pattern** |
| 1 | C | C | M | M | | Y | Y | | | | | | CCMM#YY |
| 2 | C | C | | M | M | Y | Y | | | | | | CC#MMYY |
| 3 | | C | C | M | M | | Y | Y | | | | | CCMM#YY |
| 4 | | C | C | | M | M | Y | Y | | | | | CC#MMYY |
| 5 | | | C | C | M | M | | Y | Y | | | | CCMM#YY |
| 6 | | | C | C | | M | M | Y | Y | | | | CC#MMYY |
| 7 | | | | C | C | M | M | | Y | Y | | | CCMM#YY |
| 8 | | | | C | C | | M | M | Y | Y | | | CC#MMYY |
| 9 | | | | | C | C | M | M | | Y | Y | | CCMM#YY |
| 10 | | | | | C | C | | M | M | Y | Y | | CC#MMYY |
| 11 | | | | | | C | C | M | M | | Y | Y | CCMM#YY |
| 12 | | | | | | C | C | | M | M | Y | Y | CC#MMYY |

As can be seen from the "Pattern" column, in this print mode, the order and spacing of the primary color spacing alternates between two patterns "CCMM#YY" and "CC#MMYY." These differences are not extreme. These patterns tend to spread out the timing of all the passes and tend to smooth out the effect of the time gaps. In other words, the time gaps are averaged among a greater number of printing passes. Finally, the height of the different pattern areas is smaller, only 4 nozzles high, making the patterns less visible. Thus, the print mode of Fig. 5 also provides a reduction in visible wait-banding over the print mode of Fig. 4.

Also, the print mode of Fig. 5 further reduces problems of halo and bloom. Each black pass only deposits 1/6 area fill density, and each color pass only deposits 50% area fill density. Therefore, the amount of color and black dots being laid down next to each other in consecutive passes is reduced, thereby reducing the possibility of interactions of ink chemistries between wet black and color dots. As stated, the halo and bloom problems are depend on the amount of wet black and wet color dots that are exposed to each other.

The illustrated print modes thus provide significant improvement in print quality resulting from decreased wait-banding, haloing, and bloom. White-banding is also alleviated. The illustrated print modes achieve these results without undue decreases in throughput, and even provide increased throughput over certain prior print modes.

## Claims

1. A method of printing on a print medium, the method comprising:
(a) providing a scanning ink-jet printhead with black nozzles having a black swath height (K);
(b) providing color nozzles, the color nozzles being divided into a plurality of color nozzle groups, each said group having a color swath height (C) that is less than said black swath height;
(c) providing a preselected color area fill density;
(d) providing a black shingle mask having a black area fill density that is C/K of said color area fill density;
(e) printing a black pass according to said black shingle mask;
(f) printing a color pass at said color area fill density;
(g) advancing said print medium a portion of said black swath height; and
(h) repeating steps (e), (f), and (g) to print a desired image.

2. A method according to claim 1, wherein in step (g), said print medium is advanced approximately C/K of said black swath height.

3. A method according to claims 1 or 2, wherein at least 3 color nozzle groups are positioned vertically with respect to each other.

4. A method according to any preceding claim, wherein C/K is approximately 1/3.

5. A method according to any preceding claim, wherein color area fill density is approximately 100%.

6. A method according to any preceding claim, wherein;
said black shingle mask provides approximately 1/6 area fill density; and said color area fill density is approximately 50%.

7. A method according to any preceding claim, wherein said printhead is mounted in a carriage having a carriage speed in said scanning direction, said black passes being made at a faster carriage speed than said color passes.

8. A method according to any preceding claim, wherein said carriage has a maximum carriage speed, and wherein said black passes are made at said maximum carriage speed.

9. A method of printing on a print medium, the method comprising:
(a) providing black nozzles having a black swath height;
(b) providing at least 3 color nozzle groups that are positioned vertically with respect to each other and which each have a color swath height;
(c) providing a preselected color area fill density;
(d) providing a black shingle mask having an area fill density that is less than said color area fill density;
(e) printing a black pass according to said black shingle mask;
(f) printing a color pass at said preselected color area fill density;
(g) advancing said print medium approximately the amount of said color swath height; and
(g) repeating steps (e) through (g) until a desired image is completed.

10. A method according to claim 9, wherein said black shingle mask provides approximately 1/3 area fill density and wherein said color area fill density is approximately 100%.

11. A method according to claim 10, wherein in step (d) of claim 9, said print medium is advanced approximately 1/3 of said black swath height.
